(19) Europäisches Patentamt
European Patent Office
Office européen des brevets

(11) **EP 2 557 211 B1**

(12) **EUROPEAN PATENT SPECIFICATION**

(45) Date of publication and mention
of the grant of the patent:
**01.11.2017 Bulletin 2017/44**

(51) Int Cl.:
*D03D 1/02* (2006.01)     *D06M 15/693* (2006.01)
*B60R 21/16* (2006.01)

(21) Application number: **11762973.3**

(22) Date of filing: **25.03.2011**

(86) International application number:
**PCT/KR2011/002086**

(87) International publication number:
**WO 2011/122801 (06.10.2011 Gazette 2011/40)**

(54) **POLYESTER FABRIC AND METHOD FOR MANUFACTURING SAME**

POLYESTERFASER UND VERFAHREN ZU IHRER HERSTELLUNG

TISSU POLYESTER ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2010 KR 20100028698**

(43) Date of publication of application:
**13.02.2013 Bulletin 2013/07**

(73) Proprietor: **Kolon Industries, Inc.
Gwacheon-si, Gyeonggi-do 13837 (KR)**

(72) Inventors:
• **KIM, Jae-Hyung
Gumi-si
Gyeongsangbuk-do 730-796 (KR)**
• **KWAK, Dong-Jin
Daegu 706-180 (KR)**
• **KIM, Ki-Jeong
Yeongcheon-si
Gyeongsangbuk-do 770-090 (KR)**

• **KIM, Hee-Jun
Daegu 702-758 (KR)**
• **YOUN, Jung-Hoon
Gumi-si
Gyeongsangbuk-do 730-140 (KR)**
• **LEE, Sang-Mok
Gumi-si
Gyeongsangbuk-do 730-020 (KR)**

(74) Representative: **Ter Meer Steinmeister & Partner
Patentanwälte mbB
Nymphenburger Straße 4
80335 München (DE)**

(56) References cited:
**EP-A1- 0 442 373**     **WO-A1-01/34435**
**WO-A1-2011/011407**     **JP-A- 6 322 636**
**JP-A- 11 222 776**     **KR-A- 950 011 677**
**US-A1- 2008 139 731**

**Description**

The present invention relates to an airbag fabric and a preparation method for the same, and more particularly to a polyester fabric, a preparation method for the same, and an airbag for vehicle comprising the same, where the polyester fabric uses a polyester fiber having low Young's modulus, high strength, and high elongation to impart good mechanical properties, such as high strength and high thermal resistance.

**BACKGROUND OF THE INVENTION**

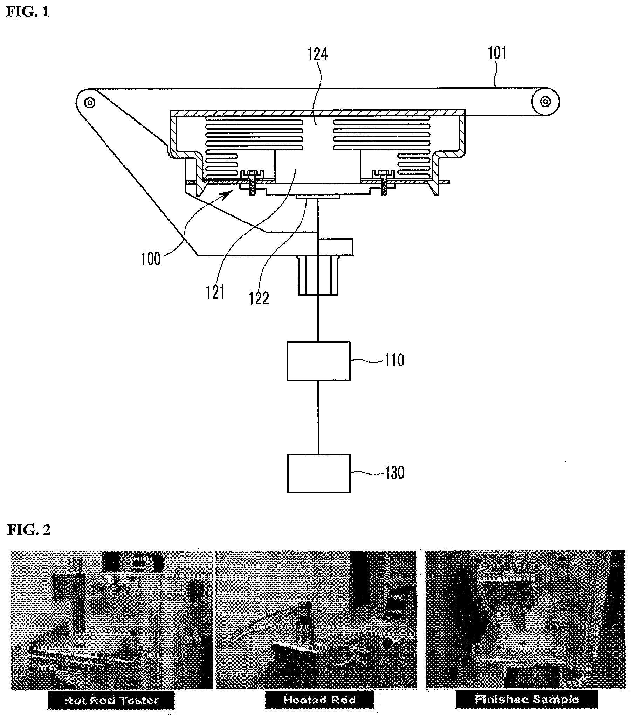

Generally, an airbag refers to a vehicle safety device for providing protection to the occupants during a frontal vehicle collision at an impact speed of about 40 km/h or above by deploying explosive chemicals to generate a gas and inflate the airbag cushion upon sensing a crash with a crash impact sensor. The structure of a general airbag system is as illustrated in FIG. 1.

As shown in FIG. 1, a general airbag system comprises an airbag module 100 mounted in the steering wheel and containing an inflator 121 for generating gas upon ignition triggered by a detonator 122, and an airbag 124 being inflated by the gas to spread out toward the driver; an impact sensor 130 for generating impact signals in the event of a collision; and an electronic control module 110 for igniting the detonator 122 of the inflator 121 upon receiving the impact signals. In the event of a frontal collision, the impact sensor 130 in the airbag system senses collision impacts to send impact signals to the electronic control module 110. Upon recognition of the impact signals, the electronic control module 110 triggers the detonator 122 to ignite the gas generator propellant in the inflator 121. The ignited gas generator propellant rapidly generates a gas to inflate an airbag 124. Being inflated to unfold, the airbag collides with the driver's chest to partly absorb the impact load caused by the vehicle collision. Inertia causes the driver's head and chest move toward to collide with the airbag 124, in which case the gas of the airbag 124 rapidly exits through the exhaust holes formed in the airbag 124 to cushion the driver's head and chest. In this manner, the airbag system effectively relieves impacts on the driver in the event of a frontal collision to reduce the risk of secondary injuries.

It is therefore of a great importance to secure flexibility for reducing impacts on the occupants as well as good mechanical properties, such as low air permeability to facilitate airbag unfolding, and high strength and high thermal resistance to prevent damage or rupture of the airbag, folding property, with a view to effectively maintaining folding and packing properties of the airbag when installed into a vehicle, preventing damage or rupture of the airbag, acquiring high unfolding performance of the airbag cushion and minimizing impacts on the occupants. In fact, there have never been suggested airbag fabrics capable of maintaining air sealing effect and flexibility for the occupant's safety, sufficiently enduring impacts on the airbag, and being packed into a vehicle effectively.

Conventionally, polyamide fibers such as nylon 66 have been used as a material for airbag fabric. Despite high impact resistance, nylon 66 is inferior to polyester fibers in regard to resistance to heat and humidity, light resistance, and dimensional stability, and more expensive.

Japanese Patent Publication No. Hei 04-214437 and WO 01/34435 A1 disclose the use of a polyester fiber overcoming these problems. However, the use of the conventional polyester fiber in the manufacture of an airbag leads to difficulty in packing the airbag into a small space in a vehicle due to extremely high stiffness, excessive thermal shrinkage during heat treatment at high temperature due to high elasticity and low elongation, and limitations in maintaining good mechanical properties and unfolding performance under severe conditions of high temperature and high humidity.

Accordingly, there is a need for developing a fabric capable of maintaining good mechanical properties and air sealing effect to be suitable for use in airbags for vehicle and providing good properties, such as high thermal resistance to endure heat treatment at high temperature, high flexibility to reduce impacts on occupants, and good packing property.

**SUMMARY OF THE INVENTION**

It is an object of the present invention to provide a polyester fabric having good mechanical properties, such as high strength and high thermal resistance, high flexibility, and good packing property.

It is another object of the present invention to provide a method for preparing the polyester fabric.

It is still another object of the present invention to provide an airbag for vehicle comprising the polyester fabric.

To achieve the objects of the present invention, there is provided a polyester fabric having a thermal resistance constant (X) of 1.0 to 6.5 as defined by the following calculation formula 1 when the fabric is uncoated:

[Calculation Formula 1]

Thermal resistance constant $(X) = (T \times t) / (600 \times D)$

In the calculation formula 1, T is the temperature of a hot rod during free fall in the range of 350 to 750 °C; t is the amount of time (sec) taken for the hot rod to pass through the polyester fabric from a point of contact with the polyester fabric; and D is the thickness (mm) of the polyester fabric, wherein the hot rod is made of steel having a thermal conductivity of 55 W/m·K and a weight of 50 g, and the hot rod is placed above the polyester fabric at a distance of about 76 mm,
wherein the thickness of the polyester fabric, as measured according to the ASTM D 1777 method, is 0.18 to 0.43 mm, and wherein the thermal resistance constant (X) as defined by the calculation formula 1 is 1.20 to 3.5 when the temperature (T) of the hot rod is 450 °C; and 1.0 to 2.0 when the temperature (T) of the hot rod is 600 °C,
wherein the polyester fabric comprises a polyester fiber prepared from polyester chips having an intrinsic viscosity of 1.05 to 2.0 dl/g,
wherein the polyester fiber is a polyethylene terephthalate fiber.

There is also provided a method for preparing the polyester fabric that comprises: weaving a polyester fiber into a grey fabric for airbag; scouring the grey fabric for airbag; and tentering the scoured fabric.

Further, there is provided an airbag for vehicle comprising the polyester fabric.

Hereinafter, a detailed description will be given as to a polyester fabric, a preparation method for the same, and an airbag for vehicle comprising the same in accordance with specified embodiments of the present invention. Unless stated otherwise, the terms "comprises", "comprising", "includes" and/or "including" as used herein specify the presence of stated elements (or components) without any specific limitations but do not preclude the addition of other elements (or components).

The term "airbag fabric" as used herein refers to a woven or nonwoven fabric used in the manufacture of airbags for vehicle. The airbag fabrics used in common include a plain woven fabric of Nylon 6 which is woven with a Rapier spinning machine, or a nonwoven fabric of Nylon 6. But, the airbag fabric of the present invention uses a polyester fiber and thus features good mechanical properties, such as high toughness, high tear strength, etc.

To use a polyester fiber as an airbag fiber instead of a polyamide fiber such as Nylon 66 that has been used in the prior art, it is required to overcome the problems in association with the use of the polyester fiber, including deterioration of the folding property resulting from high Young's modulus and high stiffness of the polyester fiber, deterioration of the mechanical properties pertaining to low melting heat capacity (ΔH), and the consequent deterioration of the unfolding performance.

Compared with Nylon, the polyester fiber exhibits higher stiffness due to its specific molecular structure and thus features higher Young's modulus. Hence, the use of the polyester fiber in an airbag fabric which is folded into a vehicle leads to drastic deterioration of the packing property. Further, the carboxyl end group (hereinafter, referred to as "CEG") in the polyester molecular chain attacks the ester bond under severe conditions of high temperature and high humidity to break the molecular chain apart, deteriorating the properties with the progress of aging.

Accordingly, the present invention can improve the properties when applied as an airbag fabric by using a polyester fiber having low Young's modulus, high strength and high elongation and thereby optimizing the thermal resistance constant of the polyester fiber, to secure good mechanical properties and air sealing performance and remarkably reduce the stiffness.

Particularly, a series of experiments carried out by the inventors of the present invention have revealed that the use of a polyester fabric having defined characteristics in preparing an airbag fabric enables the airbag fabric to maintain good mechanical properties (e.g., high strength and high thermal resistance), air leak protecting performance, packaging performance, etc. under severe conditions of high temperature and high humidity and enhances folding property, dimensional stability, and air sealing effect, thereby securing more enhanced packing properties when the fabric used as an airbag fabric is packed into a vehicle.

In accordance with one embodiment of the present invention, there is provided a polyester fabric having defined characteristics. Such a polyester fabric has a thermal resistance constant (X) of 1.0 to 6.5 as defined by the following calculation formula 1 when the fabric is uncoated:

[Calculation Formula 1]

$$\text{Thermal resistance constant (X)} = (T \times t) / (600 \times D)$$

In the calculation formula 1, T is the temperature of a hot rod during free fall in the range of 350 to 750 °C (degree celsius); t is the amount of time (sec) taken for the hot rod to pass through the polyester fabric from a point of contact with the polyester fabric; and D is the thickness (mm) of the polyester fabric.

From the results of a series of experiments, the inventors of the present invention have found it out that the use of a specific polyester fabric having an optimized thermal resistance constant in a defined range can provide an airbag fabric capable of effectively absorbing and enduring energy of the high temperature high pressure gas. More specifically, the "uncoated" polyester fabric before the coating process has a thermal resistance constant (X) of 1.0 to 6.5, preferably 1.1 to 5.8, and thus can be used as an airbag fabric very effectively.

The term "thermal resistance constant" as used herein refers to the retention time taken for a hot rod to pass through the polyester fabric based on the thickness of the polyester fabric, as defined by the calculation formula 1, and represents the thermal resistance index of the airbag fabric under high-temperature conditions. The thermal resistance constant is a characteristic value varying depending on the material of the airbag fabric, and used to make simulation predicting how much an airbag fabric can endure the instantaneous high temperature high pressure gas ejected from the inflator in the event of airbag unfolding. The higher melting heat capacity $\Delta H$ of the polyester fabric for airbag leads to the higher thermal resistance of the polyester fabric.

Particularly, the lower thermal resistance of the polyester fabric deteriorates the thermal resistance of the fabric to endure the high temperature high pressure gas ejected from the inflator upon airbag unfolding, so the airbag fabric using the polyester fabric is susceptible to rupture or thermal bonding. Hence, the polyester fabric of the present invention cannot be used as an airbag fabric, when the thermal resistance constant is less than 1.0 for the uncoated fabric before the coating process using a rubber component. The extremely high thermal resistance constant of the polyester fabric leads to an extremely high degree of crystallization, thereby concentrating stress on crystals to deteriorate the mechanical properties of the airbag fabric, such as tensile strength and tear strength. Thus when the thermal resistance constant is greater than 6.5 for the uncoated polyester fabric before the coating process using a copper component, the polyester fabric can hardly secure sufficient mechanical properties as an airbag fabric.

For the polyester fabric of the present invention not coated with a rubber component, the thermal resistance constant X as defined by the calculation formula 1 is 1.20 to 3.5, preferably 1.28 to 3.0 when the temperature T of the hot rod is 450 °C; and 1.0 to 2.0, preferably 1.05 to 1.8 when the temperature T of the hot rod is 600 °C. Further, the thermal resistance constant X as defined by the calculation formula 1 may be 4.2 to 6.0, preferably 4.4 to 5.7 when the temperature T of the hot rod is 350 °C; and 1.0 to 1.8, preferably 1.1 to 1.5 when the temperature T of the hot rod is 750 °C.

The polyester fabric for airbag according to the present invention may comprise a rubber coating layer, which is applied on the surface of the polyester fabric by coating or lamination. The rubber-coated polyester fabric may have a thermal resistance constant X of 2.8 to 17.0, preferably 3.0 to 16.5.

The rubber component as used herein includes at least one selected from the group consisting of powdered silicone rubber, liquid silicone rubber, polyurethane, chloroprene, neoprene rubber, and emulsion type silicone resin. The type of the rubber component for the coating layer is not specifically limited to those substances listed above, but the silicone coating is desirable with a view to eco-friendliness and mechanical properties.

The coating weight per unit area of the rubber coating layer is 20 to 200 $g/m^2$, preferably 20 to 100 $g/m^2$. More specifically, the coating weight is preferably 30 to 95 $g/m^2$ for OPW (One Piece Woven) type side curtains or airbag fabrics, and 20 to 50 $g/m^2$ for plain woven airbag fabrics.

For the polyester fabric comprising a rubber coating layer, the thermal resistance constant X as defined by the calculation formula 1 may be 3.3 to 10.0, preferably 3.5 to 9.5 when the temperature T of the hot rod is 450 °C; and 3.0 to 7.0, preferably 3.2 to 6.5 when the temperature T of the hot rod is 600 °C. Further, the thermal resistance constant X as defined by the calculation formula 1 may be 9.5 to 17.0, preferably 10.0 to 16.5 when the temperature T of the hot rod is 350 °C; and 2.8 to 6.0, preferably 3.0 to 5.8 when the temperature T of the hot rod is 750 °C.

According to a preferred embodiment of the present invention, the thermal resistance constant can be determined with a hot rod tester as illustrated in FIG. 2. In the hot rod tester, the hot rod is heated up to 350 to 750 °C, preferably 380 to 720 °C and arranged to drop from the above the fabric. The hot rod in a state of free fall is dropped down to the polyester fabric. The period of time taken for the hot rod to completely pass through the polyester fabric from the point of contact with the fabric is measured and applied to the calculation formula 1 based on the thickness of the polyester fabric to calculate the thermal resistance constant of the polyester fabric.

In one preferred embodiment of the present invention, the hot rod is placed above the polyester fabric at a distance "d" of about 76 mm. The hot rod as used herein is made of steel having a thermal conductivity of 55 W/m·K and a weight of 50 g.

The thickness of the polyester fabric, as measured according to the ASTM D 1777 method, is 0.18 to 0.43 mm, preferably 0.25 to 0.38 mm in view of securing good packing and folding properties when the airbag is packed into a vehicle, as well as good mechanical properties and good air sealing performance. Further, the thickness of the polyester fabric may be 0.18 mm or greater mm in consideration of the tear strength and the air sealing performance of the airbag cushion; and 0.43 mm or less considering the folding property of the airbag cushion.

In the airbag fabric of the present invention, the polyester fabric may comprise a polyester fiber having different values of fineness. The fineness of the polyester fiber may have an influence on the optimum range of the thermal resistance constant to secure good mechanical properties and high thermal resistance for the airbag fabric using the polyester fiber. Preferably, the polyester fabric may comprise a polyester fiber having a fineness of 400 to 650 denier. The polyester fiber may have a fineness of 400 to 650 denier in order to maintain low fineness and high strength in consideration of the folding property of the air cushion and the absorption performance to absorb the high temperature high pressure energy generated during airbag unfolding. Preferably, the polyester fiber has a fineness of 400 denier or greater in consideration of the energy absorption performance; and 650 denier or less with a view to providing good folding property for the air cushion.

The polyester fabric for airbag according to the present invention may have a toughness of 3.5 to 6.0 kJ/m$^3$, preferably 3.8 to 5.7 kJ/m$^3$, where the toughness is defined by the following calculation formula 2:

[Calculation Formula 2]

$$\text{Toughness (work of rupture)} = \int_0^{strain} F \cdot dl$$

In the calculation formula 2, F denotes the load applied when the length of the polyester fiber or fabric is increased by *dl*; and *dl* is the increment of the length of the polyester fiber or fabric.

Compared with the conventional fabrics, the polyester fabric has a higher level of toughness (work of rupture) and thus more effectively absorbs the energy of high temperature high pressure gas. The term "toughness" as used herein is defined as the amount of energy that the fabric can absorb before rupturing under the tensile force, and also defined as the resistance to an instantaneous impact. When the length of a fiber is increased from 1 to 1+dl under load F, the work is F·dl, and the toughness required to break the fiber is given by the calculation formula 2. In other words, the toughness is given by the area underneath the strength-elongation curve of the fiber or the fabric. The fabric exhibits higher toughness with an increase in the strength and elongation of the fiber used to form the fabric. Particularly, the airbag fabric with low toughness is susceptible to rupture, because the low toughness results in low resistance to the instantaneous unfolding impact from the inflator under high temperature high pressure conditions in the event of airbag unfolding. Accordingly, the fabric of the present invention of which the toughness is, for example, below 3.5 kJ/m$^3$ is unsuitable for use as an airbag fabric.

Further, the airbag fabric of the present invention concentrates the stress when inflated by an instantaneous great force from the high temperature and high pressure gas during airbag unfolding and thus exhibits a high level of tear strength. The tear strength indicates the amount of force required to rupture the airbag fabric and is measured according to the ASTM D 2261 TONGUE method. The tear strength of the airbag fabric may be 18 to 30 kgf for an uncoated fabric not comprising a separate rubber coating layer; and 30 to 60 kgf for a coated fabric. In this regard, the tear strength of the airbag fabric below the lower limit of the defined range, that is, less than 18 kgf for an uncoated fabric or less than 30 kgf for a coated fabric leads to a rupture of the airbag during unfolding, consequently with a risk of airbag malfunction. On the other hand, the tear strength of the airbag fabric above the upper limit of the defined range, that is, greater than 30 kgf for an uncoated fabric or greater than 60 kgf for a coated fabric leads to lower edge comb resistance of the fabric, abruptly deteriorating air sealing performance during airbag unfolding.

Generally, a polyester fiber has such a molecular structure that imparts higher stiffness than nylon fibers or the like, consequently with higher Young's modulus, so the use of the polyester fiber for an airbag fabric leads to considerable deterioration of folding and packing properties to make the airbag fabric difficult to pack into a small space of a vehicle. Accordingly, the present invention uses a polyester fiber with high strength and low Young's modulus to maintain the toughness and tear strength of the fabric and greatly reduce the stiffness of the fabric. The airbag fabric of the present invention may have a stiffness of 1.5 kgf or less, or 0.2 to 1.5 kgf, preferably 0.3 to 1.2 kgf, more preferably 0.4 to 0.8 kgf, where the stiffness is measured according to the ASTM D 4032 method. Like this, the airbag fabric of the present invention having a remarkably low stiffness relative to the conventional polyester fabric can acquire good folding property, high flexibility, and enhanced packing property while being packed into a vehicle.

To be used for airbags, the fabric of the present invention preferably has a stiffness maintained in the defined range. An extremely low stiffness of the fabric cannot secure supportive and protective functions when the airbag is inflated to unfold; while an extremely high stiffness of the fabric may reduce dimensional stability and thus deteriorate packing property when the airbag is packed into the vehicle. Further, the desirable stiffness of the fabric is 1.5 kgf or less, particularly, 0.8 kgf or less for a fineness below 460 denier, and 1.5 kgf or less for a fineness of 550 denier or greater, with a view to preventing deterioration of the packing property due to difficulty of folding the extremely stiff fabric, and avoiding discoloration of the fabric.

The static air permeability of the uncoated airbag fabric of the present invention (as measured according to the ASTM D 737 method) may be 10.0 cfm or less, preferably 0.3 to 8.0 cfm, more preferably 0.5 to 5.0 cfm when ΔP is 125 pa; and 14 cfm or less, preferably 4 to 12 cfm when ΔP is 500 pa. Further, the dynamic air permeability of the uncoated airbag fabric (as measured according to the ASTM D 6476 method) may be 1,700 mm/s or less, preferably 200 to 1,600 mm/s, more preferably 400 to 1,400 mm/s. The term "static air permeability" as used herein refers to the quantity of air penetrating into the airbag fabric under a predetermined pressure. The static air permeability decreases with a decrease in the filament fineness (denier per filament) of the fiber and an increase in the density of the fabric. The term "dynamic air permeability" as used herein refers to the quantity of air penetrating into the airbag fabric under an average instantaneous differential pressure of 30 to 70 kPa. In the same manner of the static air permeability, the dynamic air permeability decreases with a decrease in the filament fineness of the fiber and an increase in the density of the fabric.

By including a rubber coating layer, the airbag fabric can have a considerably reduced air permeability, approximating to 0 cfm. Due to the rubber coating layer, the static air permeability of the coated airbag fabric according to the present invention (as measured according to the ASTM D 737 method) may be 2.0 cfm or less, preferably 0.3 to 1.7 cfm, more preferably 0.5 to 1.5 cfm, when ΔP is 125 pa; and 12 cfm or less, preferably 4 to 10 cfm, when ΔP is 500 pa. The dynamic air permeability of the coated fabric (as measured according to the ASTM D 6476 method) may be 1,700 mm/s or less, preferably 200 to 1,600 mm/s, more preferably 400 to 1,400 mm/s.

In view of maintaining the packaging performance of the airbag fabric, it may not be desirable that the airbag fabric, either uncoated or coated, has the static air permeability or the dynamic air permeability above the upper limit of the corresponding air permeability range as defined above.

The airbag fabric may have a breaking elongation as measured at the room temperature according to the ASTM D 5034 method in the range of 25 to 60 %, preferably about 30 to 50 %. Preferably, the breaking elongation is 25 % or greater in consideration of the toughness of the fabric, and 60 % or less considering the edge comb resistance.

Further, the shrinkage of the fabric in the warp or weft direction as measured according to the ASTM D 1776 method may be 1.0 % or less, preferably 0.8 % or less. Most preferably, the shrinkage in the warp or weft direction is not greater than 1.0 % in consideration of the dimensional stability.

Preferably, the present invention is capable of maintaining such enhanced properties throughout an aging process carried out in different ways with a view to securing good performance as an airbag fabric. The aging process may include at least one selected from the group consisting of heat aging, cycle aging, and humidity aging. It is preferable for the airbag fabric to maintain high levels of strengths or other properties throughout all the three aging processes.

In this regard, the heat aging involves conducting a heat treatment on the fabric at high temperature, preferably in the range of 110 to 130 °C for 300 hours or more, or 300 to 500 hours. The cycle aging includes conducting heat aging, humidity aging and cold aging in cycles. Preferably, the cycle aging involves repeatedly conducting 2 to 5 cycles of a first aging at 30 to 45 °C and 93 to 97 % in relative humidity (RH) for 12 to 48 hours, a second aging at 70 to 120 °C for 12 to 48 hours, and a third aging at -10 to -45 °C for 12 to 48 hours. The humidity aging includes conducting an aging under conditions of high temperature and high humidity, preferably at 60 to 90 °C and 93 to 97 % RH for 300 hours or more, or 300 to 500 hours.

Particularly, the airbag fabric of the present invention may have strength retention of at least 80 %, preferably at least 85 %, more preferably at least 90 %, where the strength retention of the fabric is determined by calculating the percentage (%) of the strength after aging under the defined conditions with respect to the strength measured at the room temperature. Like this, the present invention can maintain high levels of strength and strength retention throughout a long-term aging under severe conditions of high temperature and high humidity, resulting in high performance as an airbag fabric.

In accordance with another embodiment of the present invention, there is provided a polyester fabric for airbag prepared from a polyester fiber having defined characteristics. The polyester fabric may comprise a polyester fiber having a filament fineness of 2.5 to 6.8 DPF, each fiber comprising at least 110 filaments.

Rather than using the conventional high-modulus polyester fiber with high strength and low elongation, the present invention uses a low-modulus polyester fiber having high strength and high elongation to provide a polyester fabric for airbag, which is superior in dimensional stability, air sealing performance, and folding property, as well as in energy absorption performance during inflation of the airbag.

The polyester fabric for airbag according to the present invention may comprise a polyester fiber having different values of fineness. The fineness of the polyester fiber may have an influence on the optimum range of the thermal resistance constant for securing good mechanical properties and high thermal resistance for the airbag fabric using the polyester fiber. Preferably, the polyester fabric may comprise a polyester fiber having a fineness of 400 to 650 denier. The polyester fiber may have a fineness of 400 to 650 denier in order to maintain low fineness and high strength in consideration of the folding property of the air cushion and the absorption performance for absorbing the high temperature high pressure energy generated during airbag unfolding. Preferably, the polyester fiber has a fineness of 400 denier or greater in consideration of the energy absorption performance; and 650 denier or less with a view to providing good folding property for the air cushion.

The polyester fabric uses a polyester fiber prepared from polyester chips having an intrinsic viscosity of 1.05 to 2.0 dl/g, preferably 1.10 to 1.90 dl/g. To maintain good properties throughout the aging process at the room temperature and under severe conditions of high temperature and high humidity, the polyester fiber is prepared from polyester chips having an intrinsic viscosity of 1.05 dl/g or above. For acquiring low shrinkage, the polyester fabric comprises a polyester fiber prepared from polyester chips having an intrinsic viscosity of 2.0 dl/g or below.

Preferably, the polyester fiber has a shrinkage stress of 0.005 to 0.075 g/d at 150 °C which corresponds to the laminate coating temperature for general coated fabrics; and 0.005 to 0.075 g/d at 200 °C which corresponds to the sol coating temperature for general coated fabrics. In other words, the shrinkage stress of 0.005 g/d or greater at 150 °C or 200 °C prevents the fabric sagging under the heat during the coating process, and the shrinkage stress of 0.075 g/d or less reduces the relaxation stress in the process of cooling down to the room temperature subsequent to the coating process.

At least a predetermined level of tension is imposed on the polyester fiber during the heat treatment of the coating process to maintain the woven shape of the fiber, so the shrinkage at 177 °C is preferably 6.5 % or below with a view to preventing deformation of the airbag fabric.

The shrinkage stress as defined herein is based on the measurement value under a fixed load of 0.10 g/d, and the shrinkage is based on the measurement value under a fixed load of 0.01 g/d.

The polyester fiber is a polyethylene terephthalate (PET) fiber, preferably a PET fiber comprising at least 70 mol.% of PET, more preferably a PET fiber comprising at least 90 mol.% of PET.

The higher filament count results in the softer the polyester fiber, but an extremely high filament count leads to low spinnability. Therefore, the filament count is preferably in the range of 96 to 160.

For the polyester fiber, Young's modulus at 1% elongation, that is, at position where the fiber has elongation of 1% may be in the range of 60 to 100 g/de, preferably 75 to 95 g/de; and Young's modulus at 2% elongation, that is, at position where the fiber has elongation of 2% may be in the range of 20 to 60 g/de, preferably 22 to 55 g/de, where the Young's modulus is measured according to the ASTM D 885 method. The present invention can prepare a novel airbag fabric using a polyester fiber having far lower initial Young's modulus, in comparison with the conventional polyester fiber of which the Young's modulus at 1% elongation is at least 110 g/de and the Young's modulus at 2% elongation is at least 80 g/de.

The Young's modulus of the polyester fiber is the modulus of elasticity defined as the slope in the elastic portion of the stress-strain curve obtained in the tensile testing and corresponds to the elastic modulus describing how much an object is elongated and deformed as the object is stretched at both ends. The fiber with high Young's modulus has good elasticity but results in deteriorated stiffness of the fabric; while the fiber with extremely low Young's modulus has good stiffness, but with low elastic recovery, deteriorating the toughness of the fabric. In this regard, the airbag fabric prepared from a polyester fiber having a relatively low initial Young's modulus overcomes the problems in association with high stiffness of the conventional polyester fabric and secures excellences in folding and packing properties and flexibility.

The polyester fiber may have a tensile strength of 8.8 g/d or greater, preferably 8.8 to 10.0 g/d, more preferably 9.2 to 9.8 g/d; and a breaking elongation of 14 to 23 %, preferably 15 to 22 %. Further, the fiber may have a dry shrinkage of 6.5 % or less, or 1.0 to 6.5 %, preferably 2.0 to 5.6 %; and a melting heat capacity $\Delta H$ of 40 to 65 J/g, preferably 45 to 58 J/g.

As described above, the polyester fabric of the present invention is prepared using a polyester fiber having intrinsic viscosity, initial Young's modulus, and elongation in optimized ranges to impart good performance for the airbag fabric.

The polyester fiber can be prepared by melt-spinning a PET polymer into an undrawn fiber and then drawing the undrawn fiber. The specific conditions or procedures of the individual steps affect the properties of the polyester fiber directly or indirectly and thus contribute to the production of a polyester fiber suitable for use in the airbag fabric of the present invention.

In accordance with a more preferred embodiment of the present invention, the low-modulus polyester fiber with high strength and high elongation can be prepared by a method that comprises: melt-spinning a high-viscosity polymer comprising at least 70 mol% of polyethylene terephthalate and having an intrinsic viscosity of at least 1.05 dl/g at a low temperature of 200 to 300 °C to form a undrawn polyester fiber; and drawing the undrawn polyester fiber at a draw ratio of 5.0 to 6.0. In this method, a high-viscosity PET polymer having a low CEG (carboxyl end group) content, preferably 30 meq/kg or less, is subjected to melt spinning at low temperature, more preferably at low temperature and low spinning rate, where the melt-spinning process suppresses a decrease of intrinsic viscosity and an increase of CEG content to the maximum extent, maintaining good mechanical properties of the fiber and securing high elongation. Moreover, the subsequent drawing process which involves drawing at an optimized draw ratio of 5.0 to 6.0 can suppress a decrease of elongation to the maximum extent and thereby produce a low-modulus polyester fiber with high strength and high elongation, which can be effectively used in the manufacture of airbag fabrics.

In this regard, the higher temperature, for example, above 300 °C in the melt spinning process leads to thermal degradation of the PET polymer in great extent, intensifying a decrease of intrinsic viscosity and an increase of CEG content, increases molecular orientation to accelerate a decrease of elongation and an increase of Young's modulus, and causes damage to the surface of the fiber to deteriorate the whole properties of the fiber. An extremely high draw ratio, for example, greater than 6.0 in the drawing process results in excessive drawing, consequently with breaking or irregularity of the drawn fiber, so the resultant polyester fiber cannot have properties desirable for use in airbag fabrics. Further, a relatively low draw ratio in the drawing process leads to a low degree of orientation of the fiber and thus partially drops the strength of the resultant polyester fiber. Therefore, the draw ratio in the drawing process is preferably at least 5.0 to produce a low-modular polyester fiber with high strength and high elongation that are suitable for use in airbag fabrics.

The subsequent processes can be performed under the conditions optimized with a view to producing a low-modulus polyester fiber with high strength and high elongation at a high draw ratio. For example, in the direct spin draw process for preparing a polyester fiber with low Young's modulus as well as high strength and low shrinkage, the conditions for the process can be effectively optimized in a way that high-viscosity PET polymer chips are spun by melt spinning and subjected to drawing, thermo-setting, relaxation, and winding through multi-step godet rollers until the fiber is wound on a winder unit.

In this regard, the drawing process can be performed after the undrawn fiber passes through the godet rollers with an oil pick-up of 0.2 to 2.0 %.

In the relaxation process, the relaxation is preferably in the range of 1 to 14 %. The relaxation below 1 % provides a polyester fiber that does not have shrinkage but a high degree of orientation likewise at a high draw ratio, resulting in failure to prepare a polyester fiber with high elongation and low Young's modulus. The relaxation above 14 % causes severe vibration of the fiber on the godet rollers, deteriorating workability.

The drawing process may further include a thermo-setting process for processing the undrawn fiber by heat treatment at approximately 210 to 250 °C. More preferably, the heat treatment can be conducted at a temperature of 230 to 250 °C with a view to an appropriate progress of the drawing process to enhance the melting heat capacity ΔH of the fiber for airbag. In this regard, the heat treatment temperature below 210 C° leads to a low degree of crystallization of the polymer and a decrease of relaxation due to insufficient thermal effect, consequently with poor shrinkage; while the heat treatment temperature above 250 °C results in a deterioration of strength and an increase of tar generated on the rollers due to thermal degradation, thus deteriorating workability.

The winding speed for the drawn fiber passing via the godet rollers may be 2,000 to 4,000 m/min, preferably 2,500 to 3,700 m/min.

Such a process optimization allows production of a polyester fiber for airbag having low initial Young's modulus, high strength, and high elongation. Further, the optimization of the melt spinning process and the drawing process contributes to minimization of the CEG (Carboxyl End Group) content, where the CEG acts as an acid under high humidity to break the molecular chain of the polyester fiber. The resultant polyester fiber has low initial Young's modulus and high elongation and thus can be preferably used for airbag fabrics superior in mechanical properties, packing property, dimensional stability, impact resistance, and air sealing performance.

In accordance with still another embodiment of the present invention, there is provided a method for preparing an airbag fabric using a polyester fiber. The method for preparing a polyester fabric for airbag comprises: weaving a polyester fiber into a grey fabric for airbag; scouring the grey fabric for airbag; and tentering the scoured fabric.

In the present invention, the polyester fiber can be processed into the final airbag fabric by known methods of weaving, scouring, and tentering. The weaving type of the fabric is not specifically limited but preferably includes plain weaving or OPW type weaving.

Particularly, the airbag fabric of the present invention can be prepared from the polyester fiber as warp and weft threads by beaming, weaving, scouring, and tentering. The fabric can be woven with a known weaving machine, which is not specifically limited but includes a rapier loom, an air jet loom, or a water jet loom for plain woven fabrics, and a Jacquard loom for OPW fabrics.

In comparison with the prior art, the present invention involves a heat treatment process at higher temperature by using a polyester fiber with higher strength, higher elongation, and lower shrinkage. In other words, the woven grey fabric is scoured and tentered, and the tentered fabric is coated with a rubber component, dried and then solidified at a vulcanization temperature of preferably 140 to 210 °C, more preferably 160 to 200 °C, most preferably 175 to 195 °C. The vulcanization temperature can be 140 °C or above in consideration of the mechanical properties of the fabric, such as tear strength, and 210 °C or below considering stiffness. Particularly, the heat treatment can be carried out on a multi-step basis in the order of, for example, a first heat treatment at 150 to 170 °C, a second heat treatment at 170 to 190 °C, and a third heat treatment at 190 to 210 °C.

By preparing the polyester fabric of the present invention through a treat treatment at high temperature, the weave density can be enhanced due to the low-shrinkage characteristic of the polyester fiber, resulting in high dimensional stability and high air sealing performance, enhanced stiffness, and improved tear strength.

Further, the solidification process may be carried out at the above-defined vulcanization temperature for 30 to 120 seconds, preferably 35 to 100 seconds, most preferably 40 to 90 seconds. The solidification time less than 30 seconds results in a failure to solidify the rubber coating layer, thereby deteriorating the mechanical properties of the fabric and causing defoliation of the coating. The solidification time longer than 120 seconds leads to an increase in the stiffness and thickness of the final fabric product, consequently with deterioration of the folding property.

For the airbag fabric of the present invention, either one side or both sides of the woven fabric can be coated with the above-mentioned rubber component. The rubber coating layer can be applied by any known coating method, which includes, but is not specifically limited to, knife over-roll coating, doctor blade coating, or spray coating.

The coated airbag fabric can be processed into an airbag cushion in a defined shape through cutting and sewing processes. The airbag cushion is not specifically limited in shape and may be formed in any normal shape.

In accordance with a still another embodiment of the present invention, there is provided an airbag for vehicle comprising the polyester fabric.

The airbags are classified into frontal airbags and side curtain airbags. The frontal airbags include driver side airbags, passenger side airbags, lateral protection airbags, knee airbags, ankle airbags, pedestrian airbags, and so forth. The side curtain airbags deploy to protect occupants in the event of the vehicle's side impact collision or rollover. Accordingly, the airbag of the present invention includes both frontal airbags and side curtain airbags.

The present invention does not preclude addition or omission of the elements or components other than those stated herein under necessity, which are not specifically limited.

The present invention provides a polyester fabric having good mechanical properties, such as high strength and high thermal resistance, and an airbag for vehicle prepared using the polyester fabric.

The polyester fabric uses a polyester fiber having low Young's modulus, high strength, and high elongation to minimize thermal shrinkage throughout the heat treatment at high temperature, provide excellences in thermal resistance, mechanical properties, dimensional stability, and air sealing effect, and also secure good folding property and flexibility, thereby remarkably improving the packing property when the airbag is packed into a vehicle and also minimizing collision impacts on the occupants to protect the occupants with safety.

Accordingly, the polyester fabric of the present invention is preferably applicable to the manufacture of airbags for vehicle.

## BRIEF DESCRIPTION OF THE DRAWINGS

FIG. 1 is an illustration of a general airbag system.

FIG. 2 shows photographs of a hot rod tester (an instrument for measuring thermal resistance constant) according to one embodiment of the present invention.

FIG. 3 is a graph plotting the amount of time taken for a hot rod to pass through the uncoated polyester fabric of Example 1 against the hot rod temperature.

FIG. 4 is a graph plotting the amount of time taken for a hot rod to pass through the uncoated polyester fabric of Comparative Example 1 against the hot rod temperature.

## DETAILED DESCRIPTION OF THE INVENTION

Hereinafter, the present invention will be described in detail with reference to the preferred examples, which are given only to exemplify the present invention and not intended to limit the scope of the present invention.

### Examples 1 to 5

PET chips with a defined intrinsic viscosity were processed into a polyester fiber through a melt spinning machine in one step. The polyester fiber was woven into a grey fabric for airbag through a rapier loom and subjected to scouring and tentering to prepare an airbag fabric.

In the regard, Table 1 shows the intrinsic viscosity, CEG content, melt-spinning temperature, draw ratio, and heat treatment temperature of PET chips, the properties of the fiber, such as toughness, tear strength, tensile strength, and melting heat capacity (ΔH), and the warp and weft weave densities, weaving type, heat treatment temperature, rubber component, and coating weight of the fabric. The other conditions are as known in the prior art in association with the preparation of a polyester fabric for airbag.

[Table 1]

| Div. | Examples | | | | |
|---|---|---|---|---|---|
| | 1 | 2 | 3 | 4 | 5 |
| PET content (mol%) | 100 | 100 | 100 | 100 | 100 |
| Intrinsic viscosity (dl/g) of PET chip | 1.25 | 1.33 | 1.40 | 1.55 | 1.75 |

(continued)

| Div. | Examples | | | | |
|---|---|---|---|---|---|
| | 1 | 2 | 3 | 4 | 5 |
| CEG content (meq/kg) of PET chip | 30 | 27 | 24 | 23 | 22 |
| Spinning temperature (°C) | 293 | 295 | 295 | 295 | 295 |
| Draw ratio | 5.99 | 6.03 | 6.07 | 6.11 | 6.15 |
| Heat treatment temperature (°C) of fiber | 235 | 239 | 243 | 240 | 244 |
| Intrinsic viscosity (dl/g) of fiber | 0.93 | 0.97 | 1.05 | 1.11 | 1.20 |
| Toughness ($J/m^3$) of fiber | 79 | 80 | 86 | 87 | 86 |
| Young's modulus (g/de) at 1% elongation | 85 | 84 | 79 | 78 | 82 |
| Young's modulus (g/de) at 2% elongation | 47.0 | 46.6 | 26.8 | 26.3 | 26.0 |
| Tensile strength (g/de) of fiber | 9.1 | 9.2 | 9.25 | 9.3 | 9.35 |
| Breaking elongation (%) of fiber | 16.5 | 17 | 18.7 | 19.0 | 18.5 |
| Melting heat capacity ($\Delta H$) of fiber | 47.6 | 48.6 | 49.5 | 51 | 52.5 |
| Dry shrinkage (%) | 5.2 | 5.3 | 2.8 | 4.0 | 5.3 |
| Filament fineness (DPF) | 3.82 | 3.23 | 2.92 | 4.61 | 4.17 |
| Total fineness (de) | 420 | 420 | 420 | 600 | 600 |
| Filament count | 110 | 130 | 144 | 130 | 144 |
| Weave density (warp $\times$ weft) | 49x49 | 49x49 | 49x49 | 43x43 | 43x43 |
| Weaving type | Plain weaving | Plain weaving | Plain weaving | Plain weaving | Plain weaving |
| Vulcanization temperature (°C) | 180 | 185 | 190 | 185 | 190 |
| Rubber component | Liquid silicone | Liquid silicone | Liquid silicone | Liquid silicone | Liquid silicone |
| Rubber coating weight ($g/m^2$) | 25 | 25 | 25 | 25 | 25 |

The polyester fabrics prepared in Examples 1 to 5 were measured in regard to properties according to the following methods. The measurement results are presented in Table 2.

(a) Thickness

The uncoated polyester fabrics before the coating process and the rubber-coated polyester fabrics were measured in regard to thickness according to the ASTM D 1777 procedure.

(b) Thermal resistance constant

The uncoated polyester fabric before the rubber-coating process and the rubber-coated polyester fabric were cut into test specimens in dimension of 50 mm $\times$ 50 mm. Each of the specimens was placed in a hot rod tester illustrated in FIG. 2. In the hot rod tester, the hot rod (steel, 10 mm diameter, 82 mm long, 50 g weight, thermal conductivity: 55 W/m·K) was heated up to 450 to 600 °C at a rate of 20 °C/min and placed above the specimen at a distance "d" of about 76 mm. From above the specimen, the hot rod was dropped in free fall to measure the amount of time "t" (sec) taken for the hot rod to completely pass through the specimen from the point of contact with the specimen. Then the thermal resistance constant was determined as defined by the following calculation formula 1.

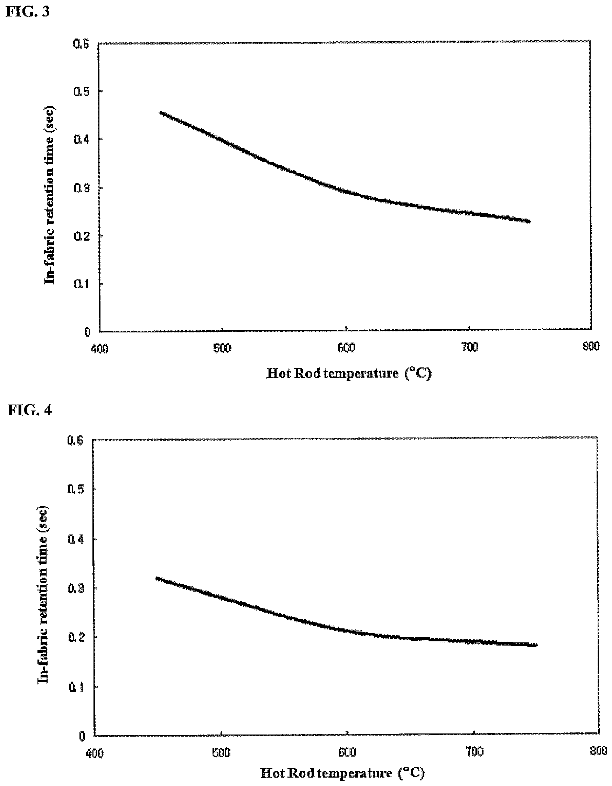

FIG. 3 is a retention time "t" (sec) taken for the hot rod to completely pass through the specimen from the point of contact with the specimen against the hot rod temperature for the uncoated polyester fabric of Example 1. In the same manner, the retention time of the hot rod during free fall was measured for each of the other polyester fabrics to calculate the thermal resistance constant according to the calculation formula 1.

This measurement procedure was repeatedly carried out 10 times for each polyester fabric to calculate the average thermal resistance constant, which is presented in Table 2.

[Calculation Formula 1]

$$\text{Thermal resistance constant (X)} = (T \times t) / (600 \times D)$$

In the calculation formula 1, T is the temperature of a hot rod during free fall in the range of 350 to 750 °C; t is the amount of time (sec) taken for the hot rod to pass through the polyester fabric from a point of contact with the polyester fabric; and D is the thickness (mm) of the polyester fabric, where D for a coated fabric is the thickness of the fabric including a coating layer.

(c) Toughness

The toughness ($J/m^3$) of the fabric was determined according to the following calculation formula 2:

[Calculation Formula 2]

$$\text{Toughness (work of rupture)} = \int_0^{strain} F \cdot dl$$

In the calculation formula 2, F denotes the load applied when the length of the polyester fiber or fabric is increased by $dl$; and $dl$ is the increment of the length of the polyester fiber or fabric.

The toughness of the fabric was measured for the uncoated fabric before the coating process.

(d) Tear strength

Test specimens in dimensions of 75 mm × 200 mm were cut out of the uncoated fabric before the coating process and the coated fabric after the coating process. The upper and lower ends of each specimen were gripped between left and right spaces of the upper and lower jaw faces, respectively, in a testing machine according to the ASTM D 2261 TONGUE procedure. Based on the distance between the jaw faces, the jaw faces moved apart at a tearing rate of 300 mm/min with the gap between the jaw faces increasing at 76 mm/min to measure the tear strength of the airbag fabric.

(e) Tensile strength and breaking elongation

The uncoated fabric before the coating process was cut into a test specimen, which was gripped in the lower stationary clamp of a tensile testing machine according to the ASTM D 5034 method, while the upper clamp was moved upward, to measure the tensile strength $T_1$ and the breaking elongation when the airbag fabric specimen was ruptured.

(f) Warp and weft shrinkages

The fabric was measured in regard to warp and weft shrinkages according to the ASTM D 1776 method. In the procedure, the uncoated fabric before the coating process was cut into a test specimen. Lines marking a 20 cm of length in the warp and weft directions were made in the specimen fabric before shrinkage. After one-hour heat treatment in a chamber at 149 °C, the lengths of the mark lines of the shrunk specimen fabric were measured to determine the warp and weft shrinkages as follows:

$$\frac{(length\ before\ shrinkage) - (length\ after\ shrinkage)}{(length\ before\ shrinkage)} \times 100\ \%$$

(g) Stiffness

The uncoated fabric before the coating process was evaluated in regard to stiffness according to the ASTM D 4032 procedure (circular bend test method) using a stiffness testing machine. The stiffness testing adopted the cantilever method, where the stiffing testing machine used a test stand declined at a predetermined angle for bending the fabric to measure the length of the fabric after bending.

(h) Air permeability

According to the ASTM D 737 method, the uncoated fabric before the coating process was kept under conditions of 20 °C and 65 % RH for one hour or longer. The static air permeability was determined as the volume of air passing through the circular cross-section 38 cm$^2$ in size, where the air pressure $\Delta P$ was 125 pa or 500 pa.
Further, the dynamic air permeability of the uncoated fabric was measured using a dynamic air permeability tester (TEXTEST FX 3350) according to the ASTM D 6476.

[Table 2]

| Div. | | Examples | | | | |
|---|---|---|---|---|---|---|
| | | 1 | 2 | 3 | 4 | 5 |
| Toughness (kJ/m$^3$) of fabric | | 3.75 | 3.83 | 3.92 | 5.4 | 5.6 |
| Tear strength (kgf) / uncoated fabric | | 19 | 19 | 20 | 26 | 26 |
| Tear strength (kgf) / coated fabric | | 36 | 37 | 38 | 38 | 40 |
| Tensile strength (kgf/inch) of fabric | | 227 | 230 | 234 | 297 | 305 |
| Breaking elongation (%) of fabric | | 37 | 37 | 39 | 38 | 40 |
| Stiffness (kgf) | | 0.40 | 0.40 | 0.35 | 1.00 | 0.90 |
| Thickness (mm) / uncoated fabric | | 0.262 | 0.262 | 0.262 | 0.325 | 0.325 |
| Thermal resistance constant /uncoated (at 450 °C, Hot Rod) | | 1.30 | 1.30 | 1.32 | 2.67 | 2.69 |
| Thermal resistance constant /uncoated (at 600 °C, Hot Rod) | | 1.11 | 1.11 | 1.12 | 1.51 | 1.53 |
| Thickness (mm) / coated fabric | | 0.268 | 0.268 | 0.268 | 0.332 | 0.332 |
| Thermal resistance constant/coated (at 450 °C, Hot Rod) | | 6.22 | 6.23 | 6.22 | 10.8 | 10.9 |
| Thermal resistance constant /coated (at 600 °C, Hot Rod) | | 5.6 | 5.6 | 5.6 | 9.7 | 9.7 |
| Shrinkage (%) | Warp | 0.5 | 0.5 | 0.4 | 0.4 | 0.5 |
| | Weft | 0.3 | 0.3 | 0.4 | 0.3 | 0.3 |
| Static air permeability (cfm) / uncoated | $\Delta P$ = 125 pa | 1.0 | 0.9 | 0.8 | 0.6 | 0.6 |
| | $\Delta P$ = 500 pa | 9.5 | 9.3 | 9.2 | 5.4 | 5.4 |
| Dynamic air permeability (mm/s)/uncoated | | 620 | 610 | 590 | 450 | 430 |

Comparative examples 1 to 3 helping to understand the invention.

The procedures were performed in the same manner as described in Examples 1 to 5, excepting that polyester fabrics were prepared under the conditions given in the following table 3.

[Table 3]

| Div. | Comparative Examples | | |
|---|---|---|---|
| | 1 | 2 | 3 |
| PET content (mol%) | 100 | 100 | 100 |
| Intrinsic viscosity (dl/g) of PET chip | 0.85 | 0.90 | 0.95 |
| CEG content (meq/kg) of PET chip | 50 | 47 | 43 |
| Spinning temperature (°C) | 301 | 302 | 305 |
| Draw ratio | 4.95 | 5.03 | 5.10 |
| Heat treatment temperature (°C) of fiber | 198 | 202 | 205 |
| Intrinsic viscosity (dl/g) of fiber | 0.61 | 0.63 | 0.65 |
| Toughness ($J/m^3$) of fiber | 59 | 63 | 67 |
| Young's modulus (g/de) at 1% elongation | 115 | 119 | 125 |
| Young's modulus (g/de) at 2% elongation | 85 | 91 | 93 |
| Tensile strength (g/de) of fiber | 6.9 | 7.2 | 7.5 |
| Breaking elongation (%) of fiber | 10 | 11 | 13 |
| Melting heat capacity ($\Delta H$) of fiber | 30.5 | 32.1 | 32.5 |
| Dry shrinkage (%) | 15.5 | 15 | 13.7 |
| Filament fineness (DPF) | 6.18 | 6.18 | 6.18 |
| Total fineness (de) | 420 | 420 | 420 |
| Filament count | 68 | 68 | 68 |
| Weave density (warp $\times$ weft) | 49x49 | 49x49 | 49x49 |
| Weaving type | Plain weaving | Plain weaving | Plain weaving |
| Vulcanization temperature (°C) | 180 | 185 | 190 |
| Rubber component | Liquid silicone | Liquid silicone | Liquid silicone |
| Rubber coating weight ($g/m^2$) | 25 | 25 | 25 |

The properties of the polyester fabrics prepared in Comparative Examples 1 to 3 are presented in the following table 4. In this regard, FIG. 4 shows a graph plotting the amount of time taken for a hot rod to pass through the uncoated polyester fabric of Comparative Example 1 against the hot rod temperature. The thermal resistance constant for each of the polyester fabrics of Comparative Examples 1 to 3 was calculated as described above.

[Table 4]

| Div. | Comparative Examples | | |
|---|---|---|---|
| | 1 | 2 | 3 |
| Toughness ($kJ/m^3$) of fabric | 2.4 | 2.5 | 2.7 |
| Tear strength (kgf) / uncoated fabric | 13 | 14 | 15 |
| Tear strength (kgf) / coated fabric | 21 | 23 | 23 |
| Tensile strength (kgf/inch) of fabric | 183 | 190 | 195 |
| Breaking elongation (%) of fabric | 18 | 20 | 20 |
| Stiffness (kgf) | 1.8 | 1.8 | 1.8 |
| Thickness (mm) / uncoated fabric | 0.265 | 0.265 | 0.265 |
| Thermal resistance constant /uncoated (at 450 °C, Hot Rod) | 0.92 | 0.95 | 0.95 |

(continued)

| Div. | | Comparative Examples | | |
|---|---|---|---|---|
| | | 1 | 2 | 3 |
| Thermal resistance constant /uncoated (at 600 °C, Hot Rod) | | 0.82 | 0.84 | 0.84 |
| Thickness (mm) / coated fabric | | 0.271 | 0.271 | 0.271 |
| Thermal resistance constant /coated (at 450 °C, Hot Rod) | | 4.83 | 4.84 | 4.85 |
| Thermal resistance constant /coated (at 600 °C, Hot Rod) | | 4.35 | 4.35 | 4.35 |
| Shrinkage (%) | Warp | 1.3 | 1.3 | 1.2 |
| | Weft | 1.2 | 1.0 | 0.9 |
| Static air permeability, (cfm) / uncoated | $\Delta P$ = 125 pa | 2.5 | 2.4 | 2.4 |
| | $\Delta P$ = 500 pa | 13.8 | 13.7 | 13.6 |
| Dynamic air permeability (mm/s)/uncoated | | 1,950 | 1,920 | 1,910 |

As shown in Tables 2 and 4, relative to the airbag fabrics of Comparative Examples 1 to 3 using the conventional polyester fiber, the polyester fabrics of Examples 1 to 5 using a low-modulus polyester fiber with high strength and high elongation to have a specific range of thermal resistance constant can exhibit good mechanical properties and enhanced properties, such as shrinkage, stiffness, and air permeability.

More specifically, the polyester fabrics of Examples 1 to 5 have a thermal resistance constant of 1.3 to 2.69 for an uncoated fabric when the actual temperature of the hot rod is 450 °C; and a thermal resistance constant of 1.11 to 1.53 for an uncoated fabric when the actual temperature of the hot rod is 600 °C, thereby acquiring very good properties, such as shrinkage of 0.3 to 0.5 %, toughness of 3.75 to 5.6 kJ/m$^3$, tear strength of 19 to 26 kgf for an uncoated fabric, tensile strength of 227 to 305 kgf/inch, and stiffness of 0.35 to 1.0 kgf. It is therefore concluded that the polyester fabric of the present invention using a high-strength, low-elongation polyester fiber with low Young's modulus to acquire a specific range of thermal resistance constant can have properties in optimum ranges for an airbag fabric and thus secure good folding and packing properties as well as high dimensional stability and good mechanical properties.

Contrarily, the airbag fabrics of Comparative Examples 1 to 3 using the conventional high-modulus polyester fiber with low strength, low elongation, and high filament fineness have a thermal resistance constant of 0.92 to 1.16 for an uncoated fabric when the actual temperature of the hot rod is 450 °C; and a thermal resistance constant of 0.82 to 0.93 for an uncoated fabric when the actual temperature of the hot rod is 600 °C, resulting in drastic deterioration in mechanical properties, such as shrinkage (0.9 to 1.3 %), tensile strength (187 to 200 kgf/inch), and tear strength for an uncoated fabric (13 to 20 kgf). The airbag fabrics of Comparative Examples inferior in mechanical properties and dimensional stability to the airbag fabrics of Examples 1 to 5 are therefore considered unsuitable for use as airbag fabrics.

## Claims

1. A polyester fabric having a thermal resistance constant (X) of 1.0 to 6.5 as defined by the following calculation formula 1 when the fabric is uncoated:

[Calculation Formula 1]

$$\text{Thermal resistance constant } (X) = (T \times t) / (600 \times D)$$

wherein T is the temperature of a hot rod during free fall in the range of 350 to 750 °C; t is the amount of time (sec) taken for the hot rod to pass through the polyester fabric from a point of contact with the polyester fabric; and D is the thickness (mm) of the polyester fabric,
wherein the hot rod is made of steel having a thermal conductivity of 55 W/m·K and a weight of 50 g, and the hot rod is placed above the polyester fabric at a distance of about 76 mm,
wherein the thickness of the polyester fabric, as measured according to the ASTM D 1777 method, is 0.18 to 0.43 mm, and
wherein the thermal resistance constant (X) as defined by the calculation formula 1 is 1.20 to 3.5 when the temperature (T) of the hot rod is 450 °C; and 1.0 to 2.0 when the temperature (T) of the hot rod is 600 °C, wherein the polyester fabric comprises a polyester fiber prepared from polyester chips having an intrinsic viscosity of 1.05 to 2.0 dl/g, wherein the polyester fiber is a polyethylene terephthalate fiber.

2. The polyester fabric as claimed in claim 1, wherein the thermal resistance constant (X) as defined by the calculation formula 1 is 1.28 to 3.0 when the temperature (T) of the hot rod is 450 °C; and 1.05 to 1.8 when the temperature (T) of the hot rod is 600 °C.

3. The polyester fabric as claimed in claim 1, wherein the polyester fabric comprises a coating layer of a rubber component formed thereon, the coated polyester fabric having a thermal resistance constant of 2.8 to 17.0.

4. The polyester fabric as claimed in claim 3, wherein the coated polyester fabric has a thermal resistance constant of 3.3 to 10.0 when the temperature (T) of the hot rod is 450 °C; and 3.0 to 7.0 when the temperature (T) of the hot rod is 600 °C.

5. The polyester fabric as claimed in claim 1, wherein the polyester fabric comprises a polyester fiber having a fineness of 400 to 650 denier.

6. The polyester fabric as claimed in claim 1, wherein the polyester fabric comprises a polyester fiber having a tensile strength of at least 8.8 g/de, a breaking elongation of 14 to 23 %, a dry shrinkage of 1.0 to 6.5 %, and a melting heat capacity ($\Delta$H) of 40 to 65 J/g.

7. The polyester fabric as claimed in claim 3, wherein the rubber component comprises at least one selected from the group consisting of powdered silicone rubber, liquid silicone rubber, polyurethane, chloroprene, neoprene rubber, and emulsion type silicone resin.

8. The polyester fabric as claimed in claim 3, wherein the coating weight per unit area of the rubber component is 20 to 200 g/m$^2$.

9. The polyester fabric as claimed in claim 1, wherein the hot rod has a diameter of 10 mm and a length of 82 mm.

10. The polyester fabric as claimed in claim 1, wherein the hot rod is heated at a rate of 20 °C/min.

11. A method for preparing the polyester fabric as claimed in any one of claims 1 to 10, comprising:

   weaving a polyester fiber into a grey fabric for airbag;
   scouring the grey fabric for airbag; and
   tentering the scoured fabric.

12. The method as claimed in claim 11, wherein the tentering step is carried out at a vulcanization temperature of 140 to 210 °C.

13. An airbag for vehicle comprising the polyester fabric as claimed in any one of claims 1 to 10.

14. The airbag for vehicle as claimed in claim 13, wherein the airbag is a frontal airbag or a side curtain airbag.

**Patentansprüche**

1. Polyestergewebe mit einer Wärmewiderstandskonstante (X) von 1,0 bis 6,5, wie definiert durch die folgende Berechnungsformel 1, in unbeschichtetem Zustand des Gewebes:

$$[\text{Berechnungsformel 1}]$$

$$\text{Wärmewiderstandskonstante (X)} = (T \times t) / (600 \times D)$$

worin T die Temperatur eines heißen Stabes beim freien Fall im Bereich von 350 bis 750 °C ist; t die Zeitspanne (Sekunde) ist, die der heiße Stab braucht, um von einem Kontaktpunkt mit dem Polyestergewebe durch das Polyestergewebe zu passieren; und D die Dicke (mm) des Polyestergewebes ist,

wobei der heiße Stab aus Stahl mit einer thermischen Leitfähigkeit von 55 W/m • K und einem Gewicht von 50 g hergestellt ist, und der heiße Stab oberhalb des Polyestergewebes in einem Abstand von etwa 76 mm platziert wird,

wobei die Dicke des Polyestergewebes, gemessen gemäß der ASTM D 1777-Methode, 0,18 bis 0,43 mm beträgt, und

wobei die Wärmewiderstandskonstante (X), wie durch die Berechnungsformel 1 definiert, 1,20 bis 3,5 beträgt, wenn die Temperatur (T) des heißen Stabes 450 °C beträgt; und 1,0 bis 2,0 beträgt, wenn die Temperatur (T) des heißen Stabes 600 °C beträgt,

wobei das Polyestergewebe eine Polyesterfaser umfasst, hergestellt aus Polyesterchips mit einer Grenzviskosität von 1,05 bis 2,0 dl/g,

wobei die Polyesterfaser eine Polyethylenterephthalatfaser ist.

2. Polyestergewebe nach Anspruch 1, wobei die durch die Berechnungsformel 1 definierte Wärmewiderstandskonstante (X) 1,28 bis 3,0 beträgt, wenn die Temperatur (T) des heißen Stabes 450 °C beträgt; und 1,05 bis 1,8 beträgt, wenn die Temperatur (T) des heißten Stabes 600 °C beträgt.

3. Polyestergewebe nach Anspruch 1, wobei das Polyestergewebe eine darauf gebildete Überzugsschicht aus einer Kautschukkomponente umfasst, wobei das beschichtete Polyestergewebe eine Wärmewiderstandskonstante von 2,8 bis 17,0 aufweist.

4. Polyestergewebe nach Anspruch 3, wobei das beschichtete Polyestergewebe eine Wärmewiderstandskonstante von 3,3 bis 10,0 aufweist, wenn die Temperatur (T) des heißten Stabes 450 °C beträgt; und von 3,0 bis 7,0 aufweist, wenn die Temperatur (T) des heißten Stabes 600 °C beträgt.

5. Polyestergewebe nach Anspruch 1, wobei das Polyestergewebe eine Polyesterfaser mit einer Feinheit von 400 bis 650 Denier umfasst.

6. Polyestergewebe nach Anspruch 1, wobei das Polyestergewebe eine Polyesterfaser mit einer Zugfestigkeit von mindestens 8,8 g/de, einer Bruchdehnung von 14 bis 23 %, einer Trockenschrumpfung von 1,0 bis 6,5 % und einer Schmelzwärmekapazität (ΔH) von 40 bis 65 J/g umfasst.

7. Polyestergewebe nach Anspruch 3, wobei die Kautschukkomponente mindestens eines umfasst, gewählt aus der Gruppe, bestehend aus pulverförmigem Silikonkautschuk, flüssigem Silikonkautschuk, Polyurethan, Chloropren, Neoprenkautschuk und Silikonharz vom Emulsionstyp.

8. Polyestergewebe nach Anspruch 3, wobei das Beschichtungsgewicht pro Einheitsfläche der Kautschukkomponente 20 bis 200 g/m$^2$ beträgt.

9. Polyestergewebe nach Anspruch 1, wobei der heiße Stab einen Durchmesser von 10 mm und eine Länge von 82 mm besitzt.

10. Polyestergewebe nach Anspruch 1, wobei der heiße Stab mit einer Geschwindigkeit von 20 °C/min erhitzt wird.

11. Verfahren zur Herstellung eines Polyestergewebes nach mindestens einem der Ansprüche 1 bis 10, umfassend:

Weben einer Polyesterfaser zu einem Rohgewebe für einen Airbag;
Reinigen des Rohgewebes für einen Airbag; und
Spannen des gereinigten Gewebes.

12. Verfahren nach Anspruch 11, wobei der Spannschritt bei einer Vulkanisierungstemperatur von 140 bis 210 °C durchgeführt wird.

13. Airbag für ein Fahrzeug, umfassend das Polyestergewebe nach mindestens einem der Ansprüche 1 bis 10.

14. Airbag für ein Fahrzeug nach Anspruch 13, wobei der Airbag ein Front-Airbag oder ein Seiten-Airbag ist.

**Revendications**

1. Un tissu de polyester ayant une constante de résistance thermique (X) de 1,0 à 6,5 telle que définie par la formule de calcul 1 suivante lorsque le tissu est non revêtu:

[formule de calcul 1]

constante de résistance thermique (X) = (T × t) / (600 × D)

dans laquelle T est la température d'une tige chaude pendant une chute libre dans la plage de 350 à 750 °C; t est la quantité de temps (sec) prise pour que la tige chaude passe à travers le tissu de polyester à partir d'un point de contact avec le tissu de polyester; et D est l'épaisseur (mm) du tissu de polyester, dans lequel la tige chaude est en fer ayant une conductivité thermique de 55 W/m·K et un poids de 50 g, et la tige chaude est placée au-dessus du tissu de polyester à une distance d'environ 76 mm, dans lequel l'épaisseur du tissu de polyester, tel que mesurée selon la méthode selon ASTM D 1777, est de 0,18 à 0,43 mm, et dans lequel la constante de résistance thermique (X) telle que définie par la formule de calcul 1 est de 1,20 à 3,5 lorsque la température (T) de la tige chaude est de 450 °C; et de 1,0 à 2,0 lorsque la température (T) de la tige chaude est de 600 °C, dans lequel le tissu de polyester comprend une fibre de polyester préparée à partir de copeaux de polyester ayant une viscosité intrinsèque de 1,05 à 2,0 dl/g, dans lequel la fibre de polyester est une fibre de téréphtalate de polyéthylène.

2. Le tissu de polyester selon la revendication 1 dans lequel la constante de résistance thermique (X) telle que définie par la formule de calcul 1 est de 1,28 à 3,0 lorsque la température (T) de la tige chaude est de 450 °C; et de 1,05 à 2,0 lorsque la température (T) de la tige chaude est de 600 °C.

3. Le tissu de polyester selon la revendication 1, dans lequel le tissu de polyester comprend une couche de revêtement d'un composant de caoutchouc formé sur celui-ci, le tissu de polyester revêtu ayant une constante de résistance thermique de 2,8 à 17,0.

4. Le tissu de polyester selon la revendication 3, dans lequel le tissu de polyester revêtu a une constante de résistance thermique de 3,3 à 10,0 lorsque la température (T) de la tige chaude est de 450 °C; et de 3,0 à 7,0 lorsque la température (T) de la tige chaude est de 600 °C.

5. Le tissu de polyester selon la revendication 1, dans lequel le tissu de polyester comprend une fibre de polyester ayant une finesse de 400 à 650 deniers.

6. Le tissu de polyester selon la revendication 1, dans lequel le tissu de polyester comprend une fibre de polyester ayant une résistance à la traction d'au moins 8,8 g/de, un allongement jusqu'à la rupture de 14 à 23%, un retrait à sec de 1,0 à 6,5% et une capacité thermique de fusion ($\Delta$H) de 40 à 65 J / g.

7. Tissu de polyester selon la revendication 3, dans lequel le composant de caoutchouc comprend au moins un élément choisi parmi le groupe constitué par le caoutchouc de silicone en poudre, le caoutchouc de silicone liquide, le polyuréthane, le chloroprène, le caoutchouc de néoprène et la résine de silicone de type émulsion.

8. Le tissu de polyester selon la revendication 3, dans lequel le poids de revêtement par unité de surface du composant de caoutchouc est de 20 à 200 g/m$^2$.

9. Le tissu de polyester selon la revendication 1, dans lequel la tige chaude a un diamètre de 10 mm et une longueur de 82 mm.

10. Le tissu de polyester selon la revendication 1, dans lequel la tige chaude est chauffée en augmentant la température à une vitesse de 20 °C/min.

11. Un procédé de préparation le tissu de polyester selon l'une quelconque des revendications 1 à 10, comprenant:

le tissage d'une fibre de polyester dans un tissu gris pour un sac gonflable;

le décapage du tissu gris pour le sac gonflable; et
la contrainte du tissu décapé.

**12.** Procédé selon la revendication 11, dans lequel l'étape de contrainte est effectuée à une température de vulcanisation de 140 à 210 °C.

**13.** Un sac gonflable pour véhicule comprenant le tissu de polyester selon l'une quelconque des revendications 1 à 10.

**14.** Le sac gonflable pour véhicule selon la revendication 13, dans lequel le sac gonflable est un sac gonflable frontal ou un sac gonflable latéral en rideau.

FIG. 1

FIG. 2

Hot Rod Tester          Heated Rod          Finished Sample

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI04214437 B

- WO 0134435 A1